(19) Europäisches Patentamt
European Patent Office
Office européen des brevets

(11) Publication number: **0 213 885 B1**

# (12) EUROPEAN PATENT SPECIFICATION

(45) Date of publication of patent specification: **06.11.91**

(51) Int. Cl.5: **C10M 169/06**, //(C10N10/02, 60:14),(C10M169/06,117:04, 133:16,133:48,137:10,139:00), (C10M169/04,117:04,137:10, 139:00)

(21) Application number: **86306447.3**

(22) Date of filing: **20.08.86**

The file contains technical information submitted after the application was filed and not included in this specification

## (54) Grease compositions containing borated catechol compounds and hydroxy-containing soap thickeners.

(30) Priority: **27.08.85 US 769827**
**27.08.85 US 769912**
**27.08.85 US 769837**

(43) Date of publication of application:
**11.03.87 Bulletin 87/11**

(45) Publication of the grant of the patent:
**06.11.91 Bulletin 91/45**

(84) Designated Contracting States:
**AT BE CH DE FR GB IT LI NL SE**

(56) References cited:
**EP-A- 0 151 859**
**US-A- 3 361 672**
**US-A- 3 445 498**
**US-A- 4 374 032**
**US-A- 4 389 322**

(73) Proprietor: **MOBIL OIL CORPORATION**
**150 East 42nd Street**
**New York New York 10017(US)**

(72) Inventor: **Doner, John Phillips**
**187 Golfview Drive**
**Sewell New Jersey 08080(US)**
Inventor: **Horodysky, Andrew Gene**
**139 Weston Drive**
**Cherry Hill New Jersey 08003(US)**
Inventor: **Keller, John Antone, Jr.**
**10 Thompson Avenue**
**Pitman New Jersey 08071(US)**

(74) Representative: **Cooper, John Anthony et al**
**Mobil Court 3 Clements Inn**
**London WC2A 2EB(GB)**

**EP 0 213 885 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention is concerned with grease compositions. More particularly it is concerned with a grease composition comprising oil, hydroxy-containing soap thickener and certain borated compounds and, optionally, phosphorus and sulfur moieties.

The publication "Manufacture and Application of Lubricating Grease" by C. J. Boner (Reinhold Publishing Company) 1954, pp. 155 and 436, 437 discloses the use of lithium soaps in grease making. The publication "Lubricant Additive" by C. V. Smalheer et al (Leyuis-Hiles Co.) 1967, pp. 1-11, discloses the use of phosphonates and thiophosphonates as additives in lubricants. "Condensed Chemical Dictionary" 9th Edition, (Van Nostrand Reinhold Company) at pages 520 and 938 discloses the use of lithium hydroxystearate in grease making and zinc dialkydithiophosphate as a lube oil additive.

This invention provides a grease composition comprising a lubricating component, between 3 and 20 percent by weight of a hydroxy-containing thickener and between 0.2 and 10 percent by weight of a borated compound prepared by reacting a boron compound with a catechol to form a compound having the structural formula of

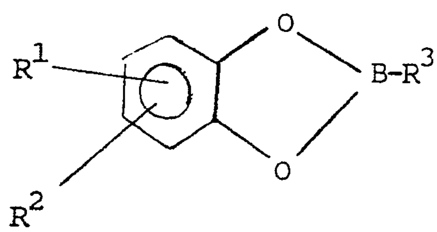

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;

(2) an $NR^4$ group where $R^4$ is a $C_1$-$C_{40}$ hydrocarbon group which can contain additionally oxygen, sulfur or nitrogen atoms;

(3) an $OR^5$ group where $R^5$ is a $C_1$-$C_{40}$ hydrocarbon group which can contain additionally oxygen, sulfur or nitrogen atoms; or

(4) an $OR^6$ group where $R^6$ is a boron, catechol, ester or hydroxy-containing moiety;

the boron compound being selected from boric acid, boric oxide or an alkyl borate of the formula

$(R^7O)_mB(OH)_n$

where $R^7$ is an alkyl group containing from 1 to 6 carbon atoms, m is 1 to 3, n is 0 to 2, their sum being 3.

This invention also provides a method of elevating the dropping point of a grease composition comprising incorporating into a lubricating component between 3 and 20 percent by weight of a hydroxy-containing thickener and between 0.2 and 10 Percent by weight of a borated compound prepared by reacting a boron compound with a

catechol to form a compound having the structural formula of

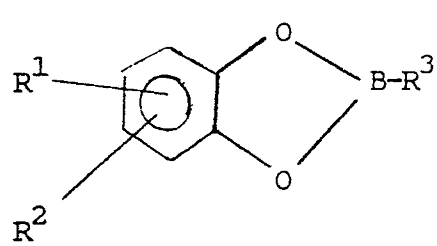

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;

(2) an $NR^4_2$ group where $R^4$ is a $C_1$-$C_{40}$ hydrocarbon group rich can contain additionally oxygen, sulfur or nitrogen atoms;

(3) an $OR^5$ group where $R^5$ is a $C_1$-$C_{40}$ hydrocarbon group which can contain additionally oxygen, sulfur or nitrogen atoms; or

(4) an $OR^6$ group where $R^6$ is boron or a catechol, ester or hydroxy-containing moiety;

the boron compound being selected from boric acid, boric oxide or an alkyl borate of the formula

$$(R^7O)_mB(OH)_n$$

where $R^7$ is an alkyl group containing from 1 to 6 carbon atoms, m is 1 to 3, n is 0 to 2, their sum being 3.

Catechol compounds

The catechol (ortho dihydroxybenzene) compounds useful in this invention include:

(a) catechol borates

(b) catechol-alcohol borate compounds; and

(c) catechol-amine borate compounds.

The catechol borate and the borated catechol alcohol or borated catechol amine compounds are obtained by the following reactions yielding these products shown:

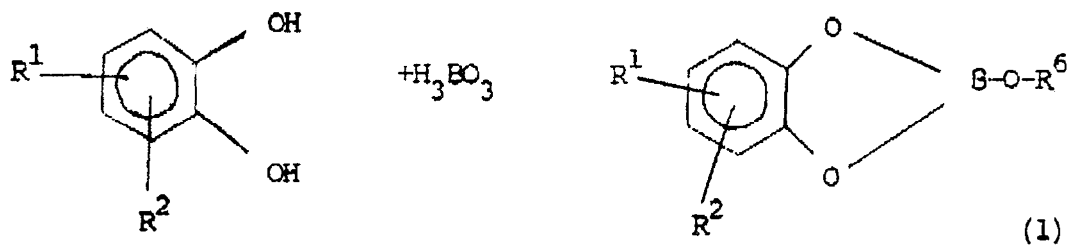

(1)

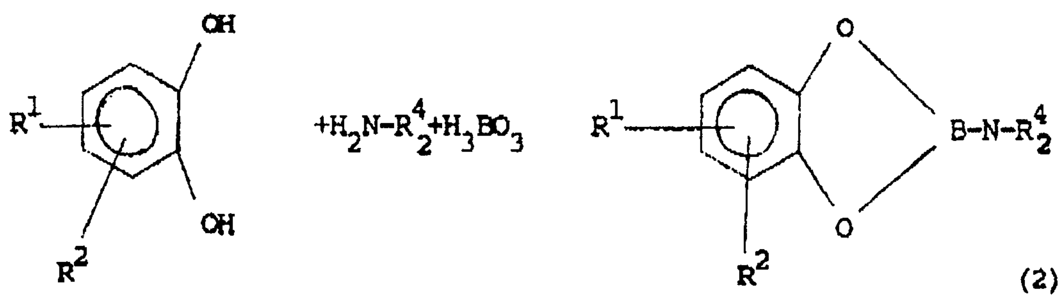

(2)

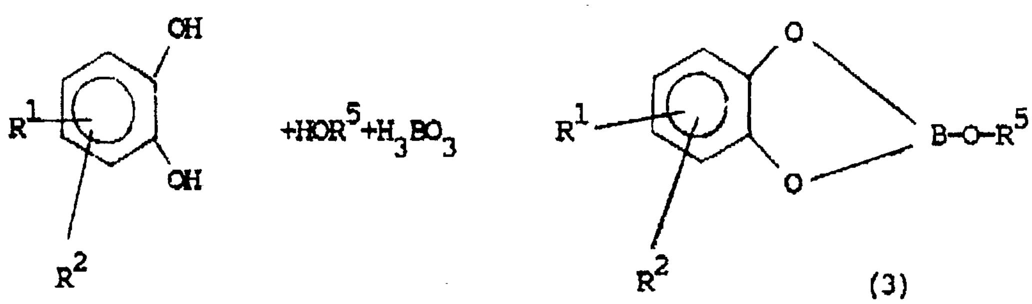

(3)

where $R^1$ and $R^2$ can each be hydrogen or $C_1$–$C_{40}$ hydrocarbyl. $R^1$ and $R^2$ optionally can also contain

sulfur, oxygen, nitrogen or other such groups as long as the presence of these elements does not negatively affect performance of the additive compound.

$R_4$ can be $C_{1-40}$ hydrocarbyl and can contain, additionally, oxygen, sulfur and/or nitrogen-containing moieties.

$R^5$ can be $C_1$-$C_{40}$ hydrocarbyl and can contain, additionally, oxygen, sulfur and/or nitrogen-containing moieties.

$R^3$ can be boron and/or catechol and/or ester and/or hydroxyl-containing moieties.

Thus the family of catechol borates useful in this invention can be represented by the following nonlimiting generic structure:

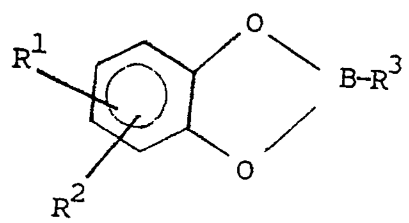

where $R^3$ can be $R^4$, $R^5$, or $R^6$, and can additionally contain oxygen, nitrogen, sulfur and boron as described above.

The reaction to make these borated compounds, as well as mixtures of catechol borates, can be carried out by mixing the two or three reactants in equal mole proportions or with an excess of up to 1000 mole percent of one or two of the reactants. The reaction is carried out at a temperature of 70 to 270° C.

Useful amines include hydrocarbyl amines, such as oleyl amine, stearyl amine, tallow amine, hydrogenated tallow amine, aniline, and other aromatic amines; diamines, such as N-coco-1,3-propylenediamine, and N-coco-1,2-ethylenediamine, and the N-linoleyl-,N-oleyl-, N-stearyl-, N-isostearyl-, N-tallow-, N-triisostearyl-, N-decyl-, counteparts thereof, N-hydrocarbyloxylpropyl hydrocarbylenediamines, triamines, polyamines, and derivatives of Polyamines, including polyethyleneamine derivatives of diethylenetriamine, triethylene, tetramine, and tetraethylenepentamine. Also included are hydroxyl-containing and sulfur-containing amines.

Useful alcohols include alkanols, unsaturated alcohols, cyclic alcohols, sulfur-containing alcohols, alkoxylated and polyalkoxylated alcohols, phenols, sulfur-containing phenolics, and mixtures of the above. Examples include oleyl alcohol, stearyl alcohol, isostearyl alcohol, mixed $C_{15}$-$C_{18}$ alcohols, phenol, dodecylphenol, nonylphenol, mixed $C_9$-$C_{11}$ alkanoldiethoxylates and the like, as well as alcohols containing nitrogen or sulfur atoms in their structure.

Useful hydroxy esters include ethyleneglycol monooleate, diethyleneglycol monooleate, glycerol dioleate, glycerol monooleate, trimethylolpropane dioleate, pentaerythritoltrioleate, and corresponding stearates, isostearates, tallowates, and other $C_{10}$-$C_{20}$ acid derived esters.

The boron source or borating agent can be an appropriate boron compound, including, but not limited to, boric acid, boric oxide, metaborates or a compound of the formula

$(R^7O)_xB(OH)_y$

wherein $R^7$ is a $C_1$ to $C_6$ alkyl group, x is 0 to 3 and y is 0 to 3, their sum being 3. As indicated by the formula, included are boric acid and the alkyl borates, such as the mono-, di- and trialkyl borates.

A narrow class of thickening agents is used to make the grease of this invention. The thickening agents contain at least a portion of alkali metal, alkaline earth metal or amine soaps of hydroxyl-containing fatty acids, fatty glycerides and fatty esters such as methyl esters having from 12 to 30 carbon atoms per molecule. The metals are typified by sodium, lithium, calcium and barium. Preferred is lithium. Preferred members among these acids and fatty materials are 12-hydroxystearic acid and glycerides and methyl esters containing 12-hydroxystearates, 14-hydroxystearic acid, 16-hydroxystearic acid and 6-hydroxystearic acid.

The entire amount of thickener need not be derived from the aforementioned members. Significant benefit can be attained using as little thereof as 5 to 15 percent by weight of the total thickener and up to 100 percent of the total thickener. A complementary amount, i.e., up to about 85% by weight of a wide variety of thickening agents can be used in the grease of this invention. Included among the other useful thickening agents are alkali and alkaline earth metal soaps of methyl-12-hydroxystearate, diesters of a $C_4$ to

$C_{12}$ dicarboxylic acid and tall oil fatty acids. Other alkali or alkaline earth metal fatty acids containing from 12 to 30 carbon atoms and no free hydroxyl may be used. These include soaps of stearic and oleic acids.

Greases benefiting from the borated additive can be produced by any of the commonly used manufacturing techniques which include: open or closed kettle saponification. Saponifications can also be carried out in pressure vessels, commonly known as contactors, at a variety of temperature and pressures. Continuous grease production type equipment can also be used to produce the grease which will be treated with the borated additive. Operating temperatures and pressures are variable as with the conditions normally used to carry out the saponification for the type of reactants involved; but the temperatures generally range from room temperature 25° C to 232 °C and pressures as high as 1310 kPa.g (190 psig) and as low as vacuum.

Other thickening agents include salt and salt-soap complexes as calcium stearate-acetate (U.S.Patent No. 2,197,263), barium stearate acetate (U.S. Patent No. 2,564,561), calcium, stearate-caprylate-acetate complexes (U.S. Patent No. 2,999,065), calcium caprylate-acetate (U.S. Patent No. 2,999,066), and calcium salts and soaps of low-, intermediate-and high-molecular weight acids and of nut oil acids.

Another group of thickening agents comprises substituted ureas, phthalocyanines, indanthrene, pigments such as perylimides, pyromellitdiimides, and ammeline, as well as certain hydrophobic clays. These thickening agents can be prepared from clays which are initially hydrophilic in character, but which have been converted into a hydrophobic condition by the introduction of long chain hydrocarbon radicals into the surface of the clay particles prior to their use as a component of a grease composition, as, for example, by being subjected to a preliminary treatment with an organic cationic surface active agent, such as an onium compound. Typical onium compounds are tetraalkylammonium chlorides, such as dimethyl dioctadecyl ammonium chloride, dimethyl dibenzyl ammonium chloride and mixtures thereof. These methods of grease manufacture, being well known to those skilled in the art, is believed to require no further discussion, and does not form a part of the present invention.

The third member(s) that may be present in the grease composition are the phosphorus and sulfur moieties. Both of these can be present in the same molecule, such as in a metal or non-metal phosphorodithioate of the formula

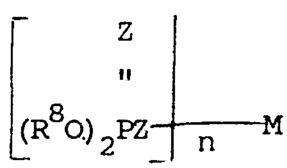

wherein $R^8$ is a hydrocarbyl group containing 3 to 18 carbon atoms or mixtures thereof. $R^8$ can also be a hydroxyl-containing or ester-containing hydrocarbyl group or may additionally contain sulfur. M is preferably a metal, but may be a non-metal, such as one of those mentioned hereinbelow, n is the valence of M and Z is oxygen or sulfur, at least one Z being sulfur. The phosphorodithioate can also be derived from diols such as 1,2 dodecanediol, 1,3 pentanediol and similar $C_4$-$C_{20}$ diols and mixtures. The phosphorodithioate can also he complexed as a zinc acetate complexed zinc phosphorodithioate.

In this compound, $R^8$ is preferably an alkyl group and may be a propyl, butyl, pentyl, hexyl, octyl, decyl, dodecyl, tetradecyl or octadecyl group, including those derived from isopropanol, propanol, butanol, isobutanol, sec-butanol, 4-methyl-2-pentanol, 2-ethylhexanol, oleyl alcohol, and mixtures thereof. Further included are all groups such as butylphenyl, octylphenyl, nonylphenyl and dodecylphenyl groups.

The metals embraced by M include those in Groups IA, IIA, IIB, and VIII of the Periodic Table. Some that may be mentioned are lithium, sodium, calcium, zinc, cadmium, silver, gold and molybdenum. Non-metallic ions include organic groups derived from vinyl esters such as vinyl acetate, vinyl ethers such as butyl vinyl ether and epoxides such as propylene oxide and 1,2-epoxydodecane. The non-metallic ions may also be derived from nitrogenous compounds such as those derived from hydrocarbyl amines and diamines, including oleylamine and N-oleyl-1,3-propylenediamine and such as the imidazolines and oxazolines.

The phosphorus and sulfur can also be supplied from the combination of two separate compounds, such as the combination of (1) a dihydrocarbyl phosphite having 2 to 10 carbon atoms in each hydrocarbyl group or mixtures of phosphites and (2) a sulfide such as sulfurized isobutylene, dibenzyl disulfide, sulfurized terpenes, phosphorodithionyl disulfide and sulfurized jojoba oil. The phosphites include the dibutyl, dihexyl, dioctyl, didecyl and similar phosphites phosphate esters containing 4 to 20 carbon atoms in

each hydrocarbyl group, such as tributyl phosphate, tridecyl phosphate, tricresyl phosphate and mixtures of such phosphates, can also be used. Compounds containing both sulfur and phosphorus can be used, such as phosphorodithionyl disulfide.

In summary, it is essential to the practice of this invention, in which greases having improved dropping points are obtained, that at least the borated friction reducing compounds and the hydroxy-containing thickener be included in the grease composition. Thus:
first, with respect to the preparation of the grease, the thickener will have at least 15% by weight of a metal or non-metal hydroxyl-containing soap therein, the total thickener being from 3 percent to 20 percent by weight of the grease composition;
second, there will be added to the grease from 0.1 percent to 10 percent by weight, preferably 0.5 percent to 2.0 percent of a borated catechol compound or mixture of borated catechol compounds, and as a third component optionally to provide further improvement, the composition may have therein from 0.2 t to 10 percent by weight, preferably from 1 percent to 2 percent by weight, of phosphorus- and sulfur-containing compounds or a mixture of two or more compounds which separately supply the phosphorus and sulfur moieties. If separate compounds are used, an amount of the mixture equivalent to the above concentration levels is used to supply desired amounts of phosphorus and sulfur.

Base oils used in the grease are mineral oil, synthetics, hydrocarbon fluids or mixtures of these. In addition, oxygen-containing fluids can be used such as dibasic acid esters, polyol esters, Polyglycols, or phosphate esters. The alkyl benzene-type lubricants are also included. Other fluids that may be used are halogenated fluids, silicones, silicate esters, or polyphenyl ethers. These lubricant fluids can he mixed or used alone as the base oil portion of the grease. In general, mineral oils, both paraffinic, naphthenic and mixtures thereof, may be of any suitable lubricating viscosity range, as for example, from 45 SSU at 38°C (100°F) to 6000 SSU at 38°C (100°F), and preferably from 50 to 250 SSU at 99°C (210°F). These oils may have viscosity indexes ranging to 100 or higher. Viscosity indexes from 70 to 95 are preferred. The average molecular weights of these oils may range from 250 to 800. In making the grease, the lubricating oil from which it is prepared is generally employed in an amount sufficient to balance the total grease composition, after accounting for the desired quantity of the thickening agent, and other additive components to be included in the grease formulation.

In instances where synthetic oils are desired, in preference to mineral oils, various compounds of this type may be successfully utilized. Typical synthetic vehicles include polyisobutylene, polybutenes, hydrogenated polydecenes, polypropylene glycol, polyethylene glycol, trimethylol propane esters, neopentyl and pentaerythritol esters, di(2-ethylhexyl) sebacate, di(2-ethylhexyl) adipate, dibutyl phthalate, fluorocarbons, silicate esters, silanes, esters of phosphorus-containing acids, liquid ureas, ferrocene derivatives, hydrogenated synthetic oils, chain-type polyphenyls, siloxanes and silicones (polysiloxanes), alkyl-substituted diphenyl ethers typified by a butyl-substituted bis(p-phenoxy phenyl) ether, phenoxy phenylethers.

The metallic soap grease compositions containing one or more of the borated friction reducing compounds and hydroxy-containing soap thickeners and, optionally, one or more of the sulfur and phosphorus combinations described herein provide advantages in increased dropping point, improved grease consistency properties, antirust characteristics and potential antifatigue, antiwear and antioxidant benefits unavailable in any of the prior greases known. The grease of this invention is unique in that it can be preferably manufactured by the admixture of additive quantities of the borated compounds to the fully formed soap grease after completion of saponification.

## EXAMPLES

To demonstrate the improved dropping point achieved with the combination of a hydroxy bearing thickener and borated catechol compounds the following greases were prepared.

### EXAMPLE A

Fully Formulated Lithium Hydroxystearate Grease

This example illustrates the preparation of a grease containing a hydroxy-bearing thickener and a phosphorus-sulfur compound, but lacking the borated compound. This grease approximates a prior art or state of the art grease.

A lithium hydroxystearate grease thickener was prepared by a saponifying mixture containing 50 weight percent of 12-hydroxystearic acid in a mixture of the acid and the glycerine thereof with lithium hydroxide in a mineral oil vehicle at 177°C (351°F) in a closed contactor. After the thickener had been depressured and

dehydrated in an open kettle, sufficient mineral oil was added to reduce the thickener content to 9.0%. After the grease had cooled to 99 °C, a typical grease additive package, consisting of an amine antioxidant, phenolic antioxidant, metallic dithiophosphate (phosphorodithioate) sulfur-containing metal deactivator and nitrogen containing antitrust additives, was added. This produced a fully formulated hydroxyl-containing soap grease. The dropping point of this formulated grease was 202 °C (395 °F). The grease was tested for dropping point to compare it with greases formulated according to this invention.

EXAMPLE B

Lithium Hydroxystearate Base Grease

This example illustrates the preparation of a grease containing a hydroxy-bearing thickener but without any additive package of sulfur and phosphorus compounds and the borated compounds. This grease approximates a prior art grease without additives.

A lithium hydroxystearate-thickened base grease was prepared as generally described for Example A. No additive package was added to the grease. After reduction of the thickener content to 10%, the grease (without additives) was cooled and held for subsequent testing. The dropping point of this base grease was 202 °C (395 °F).

EXAMPLE C

Lithium Stearate/Palmitate-Thickened Base Grease

A lithium stearate/palmitate (50% stearate/50% palmitate) base grease not containing any hydroxyl groups in the soap thickeners was prepared for evaluation as generally described in Example B. The total thickener content was 10%. The dropping point was 207 °C (404 °F).

The effect of blending in two percent of each of the boron compounds described below into the hydroxystearate thickened grease and into the nonhydroxyl-containing stearate/palmitate-thickened grease was tested by measuring the dropping point of the mixed greases. Other blends of the greases were also tested. The test data are summarized in the accompanying table. It will be noted that the combination of hydroxyl bearing thickener and borated compound results in a grease of greatly improved dropping point. The further addition of sulfur and phosphorus compounds acted to further increase the dropping point.

Examples 1 to 6

Preparation of Boronated Friction Reducing Additives

(a) Catechol-Borate Compounds (Mixed Alcohol Borates).

Di-tetradecyl alkylated catechol was prepared by the reaction of 526 grams of catechol with 1875 grams of 1-tetradecene and 500 grams of toluene using 50 grams of acidic catalyst (Super Filtrol) at 170-180 °C. When the reaction was completed, as monitored by vapor phase chromatography, the solvent was removed by distillation and the product was filtered through diatomaceous earth. The product was primarily dialkylated catechol with 11% monoalkylated catechol and lesser quantities of tetradecene and oligomers of tetradecene. A portion of this product was reserved for the prep described in (b) below.

Approximately 90 grams of this catechol product, 30 grams of toluene, and 22 grams of boric acid were charged to a reactor equipped with heater, agitator and Dean-Stark tube with condenser. The reactants were heated at 150 °C over a period of 6 hours until water evolution ceased. A total of 13 grams of water was collected. Approximately 37.5 grams of mixed linear $C_{12}$-$C_{15}$ alkanols (commercially obtained as Neodol 25 from Shell Chemical Company) were added and the reaction was continued at 150 °C for 4 more hours. An additional 5 grams of water was evolved. The solvent was removed by distillation and the product was filtered through diatomaceous earth. The product contained approximately 2.5% boron.

(b) (Mixed Alkylated Catechol-Mixed Amine Borate).

Approximately 100 grams of the catechol of the reserved catechol product described above, 75 grams of toluene, and 20 grams of boric acid were reacted at approximately 130 °C for approximately 6 hours (as generally described in subparagraph (a) above until water evolution ceased. Approximately 56 grams of

oleylamine were added and the reaction was continued for 2 more hours until water evolution again ceased. The solvent was removed by vacuum distillation at approximately 140°C, and the product was filtered through diatomaceous earth. The product contained 1.7% boron.

Table

| Grease Composition | Borated Compound | % of Borated Compound in Composition | % of Zinc Dialkyl Thiophosphate | Dropping Point ASTM D 2265 |
|---|---|---|---|---|
| Example A - Hydroxy-bearing thickener & phosphorus-sulfur compound | | 0 | 1.5 | 202°C (395°F) |
| Example B - Hydroxy-bearing thickener. No added phosphorus or sulfur or other additives | | 0 | 0 | 202°C (395°F) |
| Example C - Lithium stearate/palmitate thickener. No hydroxy-bearing thickener or added sulfur or phosphorus compounds | | 0 | 0 | 207°C (404°F) |
| Example 1 | Example B+ Catechol-alcohol borate (a) | 2% | 0 | 243°C (469°F) |
| Example 2 | Example B+ " | 2% | 1.5% | 302°C (575°F) |
| Example 3 | Example C+ " | 2% | 0 | 205°C (401°F) |
| Example 4 | Example B+ Catechol-amine borate (b) | 2% | 0 | 254°C (489°F) |
| Example 5 | Example B+ " | 2% | 1.5% | 309°C (589°F) |
| Example 6 | Example C+ " | 2% | 0 | 199°C (390°F) |

**Claims**

**Claims for the following Contracting States : BE, CH, DE, FR, GB, IT, NL, SE**

1. A grease composition comprising a lubricating component, between 3 and 20 percent by weight of a hydroxy-containing thickener and between 0.2 and 10 percent by weight of a borated compound prepared by reacting a boron compound with a catechol to form a compound having the structural formula of

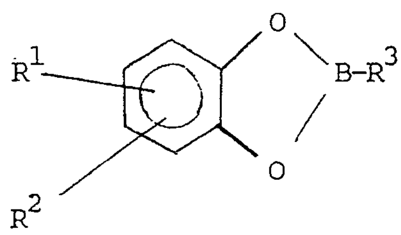

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;

(2) an $NR^4_2$group where $R^4$ is a $C_1$-$C_{40}$ hydrocarbon group which can contain additionally oxygen, sulfur or nitrogen atoms;

(3) an $OR^5$ group where $R^5$ is a $C_1$-$C_{40}$ hydrocarbon group which can contain additionally oxygen, sulfur or nitrogen atoms; or

(4) an $OR^6$ group where $R^6$ is a boron, catechol, ester or hydroxyl-containing moiety;

the boron compound being selected from boric acid, boric oxide or an alkyl borate of the formula

$(R^7O)_mB(OH)_n$

where $R^7$ is an alkyl group containing from 1 to 6 carbon atoms, m is 1 to 3, n is 0 to 2, their sum being 3.

2. The composition of claim 1 wherein the thickener contains at least 15 percent by weight of hydroxy-containing or polyhydroxy-containing thickener.

3. The composition of claim 1 wherein the grease contains between 0.2 and 10 percent by weight of phosphorus and sulfur containing compounds.

4. The composition of claim 1 wherein the hydroxy-containing thickener is lithium hydroxystearate.

5. The composition of claim 3 wherein the phosphorus and sulfur compound is zinc dihydrocarbyldithiophosphate.

6. The composition of claim 1 wherein $R^1$ or $R^2$ contain sulfur, oxygen or nitrogen atoms.

7. The composition of claim 1 wherein the hydroxy-containing thickener comprises alkali metal, alkaline earth metal or amine soaps of hydroxyl-containing fatty acids, fatty glycerides or fatty esters.

8. The composition of claim 7 wherein the hydroxy-containing thickener is lithium hydroxystearate.

9. The composition of claim 7 wherein the phosphorus and sulfur compound is zinc dihydrocarbyldithiophosphate.

10. The composition of claim 1 wherein the borated catechol product has the structural formula

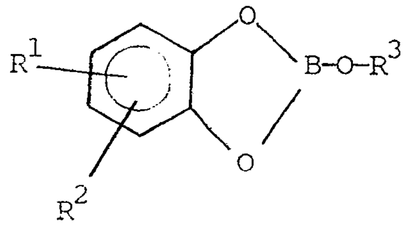

and $R^3$ is a $C_1$-$C_{40}$ hydrocarbyl radical.

**11.** The composition of claim 10 wherein $R^3$ an oxygen, sulfur, nitrogen, boron, hydroxyl or catechol containing moiety.

**12.** The composition of claim 1 wherein the borated catechol product has the structural formula

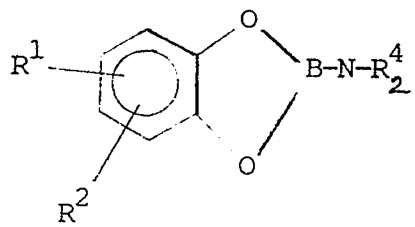

and $R^4$ is a $C_1$-$C_{40}$ hydrocarbyl radical.

**13.** The composition of claim 1 wherein $R^4$ contains an oxygen, sulfur, nitrogen, boron, hydroxyl or catechol containing moiety.

**14.** The composition of claim 12 wherein the thickener contains at least 15 percent by weight of hydroxy-containing or polyhydroxy-containing thickener.

**15.** The composition of claim 12 wherein the grease contains between 0.5 and 10 percent by weight of phosphorus and sulfur containing compounds.

**16.** The composition of claim 12 wherein the catechol compound is the borated reaction product of catechol, 1-tetradecene, boric acid and oleylamine.

**17.** The composition of claim 12 wherein the hydroxy-containing thickener is lithium hydroxystearate.

**18.** The composition of claim 12 wherein the phosphorus and sulfur compound is zinc dialkyldithiophosphate.

**19.** A method of elevating the dropping point of a grease composition comprising incorporating into the grease between 3 and 20 percent by weight of the composition of a hydroxy-containing thickener and between 0.5 and 10 percent by weight of a borated compound prepared by reacting a boron compound with a

catechol to form a compound having the structural formula of

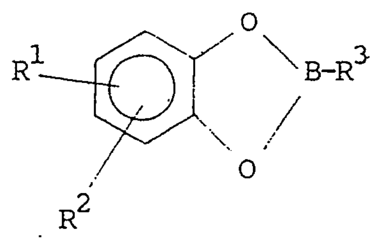

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;
(2) an $NR^4{}_2$ group where $R^4$ is a $C_1$-$C_{40}$ hydrocarbon group which can contain additionally oxygen, sulfur or nitrogen atoms;
(3) an $OR^5$ group where $R^5$ is a $C_1$-$C_{40}$ hydrocarbon group which can contain additionally oxygen, sulfur or nitrogen atoms; or
(4) an $OR^6$ group where $R^6$ is a boron, catechol, ester or hydroxyl-containing moiety;

the boron compound being selected from boric acid, boric oxide or an alkyl borate of the formula

$(R^7O)_mB(OH)_n$

where $R^7$ is an alkyl group containing from 1 to 6 carbon atoms, m is 1 to 3, n is 0 to 2, their sum being 3.

**Claims for the following Contracting State : AT**

**1.** A method of making a grease composition comprising

(i) preparing a borated compound by reacting a boron compound with a catechol to form a compound having the structural formula of

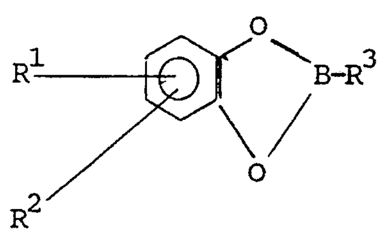

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;
(2) an $NR^4{}_2$ group where $R^4$ is a $C_1$-$C_{40}$ hydrocarbon group which can contain additionally oxygen, sulfur or nitrogen atoms;
(3) an $OR^5$ group where $R^5$ is a $C_1$-$C_{40}$ hydrocarbon group which can contain additionally oxygen, sulfur or nitrogen atoms; or
(4) an $OR^6$ group where $R^6$ is a boron, catechol, ester or hydroxyl-containing moiety;

the boron compound being selected from boric acid, boric oxide or an alkyl borate of the formula

$(R^7O)_mB(OH)_n$

where $R^7$ is an alkyl group containing from 1 to 6 carbon atoms, m is 1 to 3, n is 0 to 2, their sum being 3; and

(ii) combining a lubricating component with between 2 and 20 percent by weight of a hydroxy-containing thickener and between 0.2 and 10 percent by weight of said borated compound, thereby forming said grease composition.

2. The method of claim 1 wherein the thickener contains at least 15 percent by weight of hydroxy-containing or polyhydroxy-containing thickener.

3. The method of claim 1 wherein the grease contains between 0.2 and 10 percent by weight of phosphorus and sulfur containing compounds.

4. The method of claim 1 wherein the hydroxy-containing thickener is lithium hydroxystearate.

5. The method of claim 3 wherein the phosphorus and sulfur compound is zinc dihydrocarbyldithiophosphate.

6. The method of claim 1 wherein $R^1$ or $R^2$ contain sulfur, oxygen or nitrogen atoms.

7. The method of claim. 1 wherein the hydroxy-containing thickener comprises alkali metal, alkaline earth metal or soaps of hydroxyl-containing fatty acids, fatty glycerides or fatty esters.

8. The method of claim 7 wherein the hydroxy-containing thickener is lithium hydroxystearate.

9. The method of claim 7 wherein the phosphorus and sulfur compound is zinc dihydrocarbyldithiophosphate.

10. The method of claim 1 wherein the borated catechol product has the structural formula

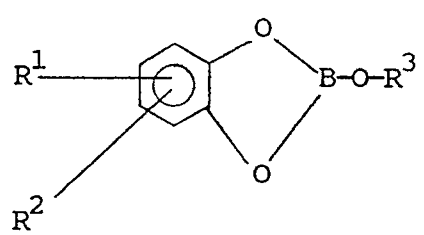

and $R^3$ is a $C_1$-$C_{40}$ hydrocarbyl radical.

11. The method of claim 10 wherein $R^3$ contains an oxygen, sulfur, nitrogen, boron, hydroxyl or catechol containing moiety.

12. The method of claim 1 wherein the borated catechol product has the structural formula

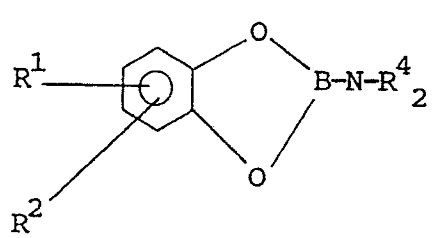

and $R^4$ is a $C_1$-$C_{40}$ hydrocarbyl radical.

13. The method of claim 1 wherein $R^4$ contains an oxygen, sulfur, nitrogen, boron, hydroxyl or catechol containing moiety.

14. The method of claim 12 wherein the thickener contains at least 15 percent by weight of hydroxy-containing or polyhydroxy-containing thickener.

**15.** The method of claim 12 wherein the grease contains between 0.5 and 10 percent by weight of phosphorus and sulfur containing compounds.

**16.** The method of claim 12 wherein the catechol compound is the borated reaction product of catechol, 1-tetradecene, boric acid and oleylamine.

**17.** The method of claim 12 wherein the hydroxy-containing thickener is lithium hydroxystearate.

**18.** The method of claim 12 wherein the phosphorus and sulfur compound is zinc dialkyldithiophosphate.

**19.** A method of elevating the dropping point of a grease composition comprising incorporating into the grease between 3 and 20 percent by weight of the composition of a hydroxy-containing thickener and between 0.5 and 10 percent by weight of a borated compound prepared by reacting a boron compound with a catechol to form a compound having the structural formula of

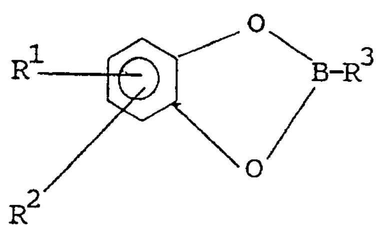

where $R^1$ and $R^2$ can each be hydrogen or a $C_1$-$C_{40}$ hydrocarbon group and $R^3$ is

(1) a $C_1$-$C_{40}$ hydrocarbon group which can contain additionally oxygen, nitrogen, sulfur or boron;

(2) an $NR^4{}_2$ group where $R^4$ is a $C_1$-$C_{40}$ hydrocarbon group which can contain additionally oxygen, sulfur or nitrogen atoms;

(3) an $OR^5$ group where $R^5$ is a $C_1$-$C_{40}$ hydrocarbon group which can contain additionally oxygen, sulfur or nitrogen atoms; or

(4) an $OR^6$ group where $R^6$ is a boron, catechol, ester or hydroxyl-containing moiety;

the boron compound being selected from boric acid, boric oxide or an alkyl borate of the formula

$(R^7O)_mB(OH)_n$

where $R^7$ is an alkyl group containing from 1 to 6 carbon atoms, m is 1 to 3, n is 0 to 2, their sum being 3.

**Revendications**

**Revendications pour les Etats contractants suivants : BE, CH, FR, GB, IT, NL, SE**

**1.** Une composition de graisse contenant un lubrifiant, entre 3 et 20% en poids d'un agent épaississant comportant un groupement hydroxyle et entre 0,2 et 10% en poids d'un composé boré préparé par réaction d'un composé de bore avec un catéchol pour former un composé répondant à la formule structurelle:

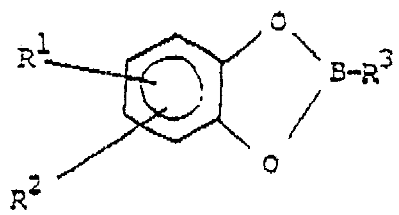

dans laquelle:
$R^1$ et $R^2$ peuvent chacun être un atome d'hydrogène ou un groupement hydrocarboné en $C_1$-$C_{40}$; et
$R^3$ est;

(1) un groupement hydrocarboné en $C_1$-$c_{40}$ qui peut contenir, de plus, des atomes d'oxygène, d'azote, de soufre ou de bore;
(2) un groupement $NR^4{}_2$ dans lequel $R^4$ est un groupement hydrocarboné en $C_1$ -$C_{40}$ qui peut contenir, de plus, des atomes d'oxygène, de soufre ou d'azote;
(3) un groupement $OR^5$ dans lequel $R^5$ est un groupement hydrocarboné en $C_1$-$c_{40}$ qui peut contenir, de plus, des atomes d'oxygène, de soufre ou d'azote; ou
(4) un groupement $OR^6$ dans lequel $R^6$ est une partie contenant des groupements hydroxyle ou du bore, du catéchol ou des esters;

le composé de bore étant choisi parmi l'acide borique, l'oxyde borique ou un borate d'alkyle répondant à la formule:

$(R^7O)_mB(OH)_n$

dans laquelle:

$R^7$ est un groupement alkyle contenant de 1 à 6 atomes de carbone,
m a une valeur de 1 à 3:
n a une valeur de 0 à 2,
leur somme étant 3.

**2.** La composition selon la revendication 1, dans laquelle l'agent épaississant contient au moins 15% en poids d'un épaississant comportant un groupement hydroxyle ou polyhydroxyle.

**3.** La composition selon la revendication 1, dans laquelle la graisse contient entre 0,2 et 10% en poids de dérivéz contenant du phosphore et du soufre.

**4.** La composition selon la revendication 1, dans laquelle l'agent épaississant comportant un groupement hydroxyle est l'hydroxystéarate de lithium.

**5.** La composition selon la revendication 3, dans laquelle le dérivé contenant du phosphore et du soufre est le dihydrocarbyldithiophosphate de zinc.

**6.** La composition selon la revendication 1, dans laquelle $R^1$ ou $R^2$ contient des atomes de soufre, d'oxygène ou

**7.** La composition selon la revendication 1, dans laquelle l'agent épaississant comportant un groupe hydroxyle comprend un savon alcalin, alcalino-terreux ou aminé d'acides gras, de glycérides gras ou d'esters gras à groupements hydroxyle.

**8.** La composition selon la revendication 7, dans laquelle l'agent épaississant comportant un groupement hydroxyle est l'hydroxystéarate de lithium.

**9.** La composition selon la revendication 7, dans laquelle le dérivé contenant du phosphore et du soufre est le dihydrocarbyldithiophosphate de zinc.

**10.** La composition selon la revendication 1, dans laquelle le produit de catéchol boré a la formule

structurelle:

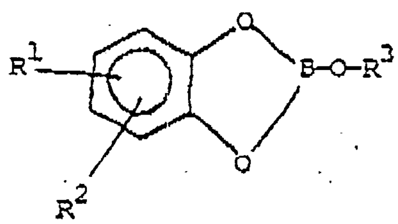

et $R^3$ est un radical hydrocarboné en $C_1$-$c_{40}$.

**11.** La composition selon la revendication 10, dans laquelle $R^3$ inclut une partie contenant du catéchol, des groupements hydroxyle, des atomes de bore, d'azote, de soufre ou d'oxygène.

**12.** La composition selon la revendication 1, dans laquelle le produit de catéchol boré répond à la formule structurelle:

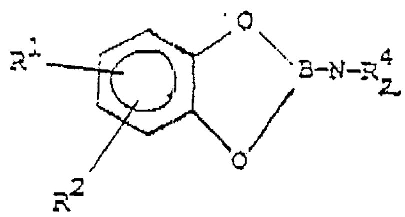

et $R^4$ est un radical hydrocarboné en $C_1$-$C_{40}$.

**13.** La composition selon la revendication 1, dans laquelle $R^4$ inclut une partie contenant du catéchol, des groupements hydroxyle, des atomes de bore, d'azote, de soufre ou d'oxygène.

**14.** La composition selon la revendication 12, dans laquelle l'agent épaississant contient au moins 15% en poids d'un épaississant comportant des groupements hydroxyle ou polyhydroxyle.

**15.** La composition selon la revendication 12, dans laquelle la graisse contient entre 0,5 et 10% en poids de dérivés contenant du phosphore et du soufre.

**16.** La composition selon la revendication 12, dans laquelle le composé au catéchol est le produit de réaction boré de catéchol, 1-tétradécène, acide borique et oleylamine.

**17.** La composition selon la revendication 12, dans laquelle l'agent épaississant contenant des groupements hydroxyle est l'hydroxystéarate de lithium.

**18.** La composition selon la revendication 12, dans laquelle le dérivé contenant phosphore et soufre est le dialkyldithiophosphate de zinc.

**19.** Un procédé d'élévation du point de goutte d'une composition de graisse comprenant l'incorporation dans la graisse d'entre 3 et 20% en poids de la composition d'un agent épaississant comportant un groupement hydroxyle et d'entre 0,5 et 10% en poids d'un dérivé boré préparé par réaction d'un composé de bore avec un catéchol pour former un composé répondant à la formule structurelle:

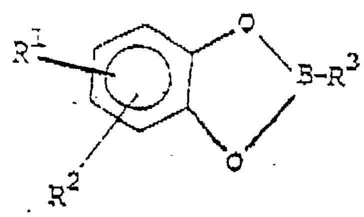

dans laquelle:
$R^1$ et $R^2$ peuvent chacun être un atome d'hydrogène ou un groupement hydrocarboné en $C_1$-$C_{40}$; et
$R^3$ est:

(1) un groupement hydrocarboné en $C_1$-$C_{40}$ qui peut contenir, de plus, des atomes d'oxygène, d'azote, de soufre ou de bore;
(2) un groupement $NR^4{}_2$ dans lequel $R^4$ est un groupement hydrocarboné en $C_1$-$C_{40}$ qui peut contenir, de plus, des atomes d'oxygène, de soufre ou d'azote;
(3) un groupement $OR^5$ dans lequel $R^5$ est un groupement hydrocarboné en $C_1$-$C_{40}$ qui peut contenir, de plus, des atomes d'oxygène, de soufre ou d'azote; ou
(4) un groupement $OR^6$ dans lequel $R^6$ est une partie contenant des groupements hydroxyle ou du bore, du catéchol ou des esters;

le composé bore étant choisi parmi l'acide borique, l'oxyde borique ou un borate d'alkyle répondant à la formule;

$(R^7O)_mB(OH)_n$

dans laquelle:

$R^7$ est un groupement alkyle contenant de 1 à 6 atomes de carbone,
m a une valeur de 1 à 3;
n a une valeur de 0 à 2,
leur somme étant 3.

**Revendications pour l'Etat contractant suivant : AT**

1. Un procédé de préparation d'une composition de graisse consistant à:
(i) préparer un composé boré par réaction d'un composé de bore avec un catéchol de façon à former un composé répondant à la formule structurelle:

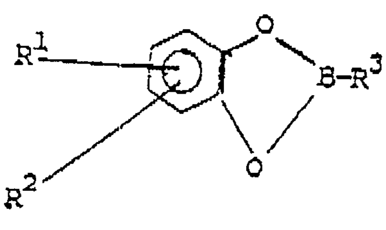

dans laquelle:
$R^1$ et $R^2$ peuvent chacun être un atome d'hydrogéne ou un groupement hydrocarboné en $C_1$-$C_{40}$; et
$R^3$ est:

(1) un groupement hydrocarboné en $C_1$-$C_{40}$ qui peut contenir, de plus, des atomes d'oxygène, d'azote, de soufre ou de bore;
(2) un groupement $NR^4{}_2$ dans lequel $R^4$ est un groupement hydrocorboné en $C_1$-$C_{40}$ qui peut contenir, de plus, des atomes d'oxygène, de soufre ou d'azote;
(3) un groupement $OR^5$ dans lequel $R^5$ est un groupement hydrocarboné en $C_1$-$C_{40}$ qui peut contenir, de plus, des atomes d'oxygène, de soufre ou d'azote; ou
(4) un groupement $OR^6$ dans lequel $R^6$ est une partie contenant des groupements hydroxyle ou du bore, du catéchol ou des esters;

le composé bore étant choisi parmi l'acide borique, l'oxyde borique ou un borate d'alkyle répondant à la formule:

$(R^7O)_mB(OH)_n$

dans laquelle:

$R^7$ est un groupement alkyle contenant de 1 à 6 atomes de carbone,
m a une valeur de 1 à 3;
n a une valeur de 0 à 2,
leur somme étant 3;

(ii) combiner un lubrifiant avec entre 2 et 20% en poids d'un agent épaississant comprenant un groupement hydroxyle et entre 0,2 et 10% en poids dudit composé boré, formant par là-même ladite composition de graisse.

**2.** Le procédé selon la revendication 1, dans lequel l'agent épaississant contient au moins 15% en poids d'un épaississant contenant un groupe hydroxyle ou polyhydroxyle.

**3.** Le procédé selon la revendication 1, dans lequel la graisse contient 0,2 et 10% en poids de dérivés contenant du phosphore et du soufre.

**4.** Le procédé selon la revendication 1, dans lequel l'agent épaississant contenant un groupe hydroxyle est l'hydroxystéarate de lithium.

**5.** Le procédé selon la revendication 3, dans lequel le dérivé contenant phosphore et soufre est le dihydrocarbyldithiophosphate de zinc.

**6.** Le procédé selon la revendication 1, dans lequel $R^1$ ou $R^2$ contient des atomes de soufre, d'oxygène ou d'azote.

**7.** Le procédé selon la revendication 1, dans lequel l'agent épaississant comportant un groupe hydroxyle comprend un savon alcalin, alcalino-terreux ou aminé d'acides gras, de glycérides gras ou d'esters gras à groupements hydroxyle.

**8.** Le procédé selon la revendication 7, dans lequel l'agent épaississant comportant un groupement hydroxyle est l'hydroxystéarate de lithium.

**9.** Le procédé selon la revendication 7, dans lequel le dérivé contenant phosphore et soufre est le dihydrocarbyldithiophosphate de zinc.

**10.** Le procédé selon la revendication 1, dans lequel le catéchol boré répond à la formule structurelle:

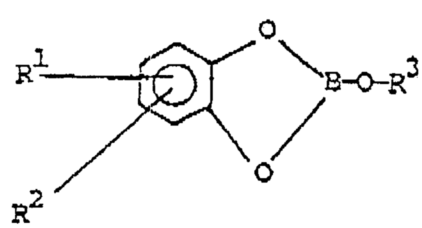

et $R^3$ est un radical hydrocarboné en $C_1$-$C_{40}$.

**11.** Le procédé selon la revendication 10, dans lequel $R^3$ inclut une partie contenant du catéchol, des groupements hydroxyle, des atomes de bore, d'azote, de soufre ou d'oxygène.

**12.** le procédé selon la revendication 1, dans lequel le produit de catéchol boré répond à la formule structurelle:

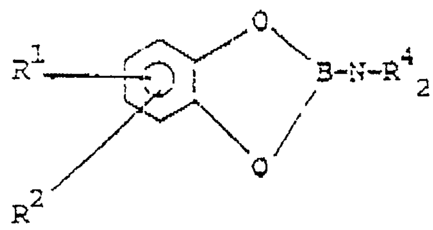

et $R^4$ est un radical hydrocarboné en $C_1$-$C_{40}$.

**13.** Le procédé selon la revendication 1, dans lequel $R^4$ inclut une partie contenant du catéchol, des groupements hydroxyle, des atomes de bore, d'azote, de soufre ou d'oxygène.

**14.** Le procédé selon la revendication 12, dans lequel l'agent épaississant contient au moins 15% en poids d'un épaississant comportant des groupements hydroxyle ou polyhydroxyle.

**15.** Le procédé selon la revendication 12, dans lequel la graisse contient entre 0,5 et 10% en poids de dérivés contenant du phosphore et du soufre.

**16.** Le procédé selon la revendication 12, dans lequel le composé au catéchol est le produit de réaction boré du catéchol, 1-tétradécène, acide borique et oleylamine.

**17.** Le procédé selon la revendication 12, dans lequel l'agent épaississant contenant des groupes hydroxyle est l'hydroxystéarate de lithium.

**18.** Le procédé selon le revendication 12, dans lequel le dérivé contenant phosphore et soufre est le dialkyldithiophosphate de zinc.

**19.** Un procédé d'élévation du point de goutte d'une composition de graisse comprenant l'incorporation dans la graisse d'entre 3 et 20% en poids de la composition d'un agent épaississant comportant un groupement hydroxyle et d'entre 0,5 et 10% en poids d'un dérivé boré préparé par réaction d'un composé de bore avec un catéchol de façon à former un composé répondant à la formule structurelle:

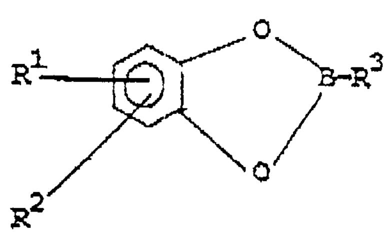

dans laquelle:
$R^1$ et $R^2$ peuvent chacun être un atome d'hydrogène ou un groupement hydrocarboné en $C_1$-$C_{40}$; et
$R^3$ est:

(1) un groupement hydrocarboné en $C_1$-$C_{40}$ qui peut contenir, de plus, des atomes d'oxygène, d'azote, de soufre ou de bore;
(2) un groupement $NR^4{}_2$ dans lequel $R^4$ est un groupement hydrocarboné en $C_1$-$C_{40}$ qui peut contenir, de plus, des atomes d'oxygène, de soufre ou d'azote;
(3) un groupement $OR^5$ dans lequel $R^5$ est un groupement hydrocarboné en $C_1$-$C_{40}$ qui peut contenir, de plus, des atomes d'oxygène, de soufre ou d'azote; ou
(4) un groupement $OR^6$ dans lequel $R^6$ est une partie contenant des groupements hydroxyle ou du bore, du catéchol ou des esters;

le composé bore étant choisi parmi l'acide borique, l'oxyde borique ou un borate d'alkyle répondant à la formule;

$(R^7O)_mB(OH)_n$

dans laquelle:

$R^7$ est un groupement alkyle contenant de 1 à 6 atomes de carbone,
m a une valeur de 1 à 3;
n a une valeur de 0 à 2,
leur somme étant 3.

**Patentansprüche**

**Patentansprüche für folgende Vertragsstaaten : BE, CH, FR, GB, IT, NL, SE**

1. Fettzusammensetzung, die eine Schmierungskomponente, zwischen 3 und 20 Gew.-% eines hydroxyhaltigen Verdickungsmittels und zwischen 0,2 und 10 Gew.-% einer borhaltigen Verbindung umfaßt, die durch Reaktion einer Borverbindung mit Brenzcatechin hergestellt wurde, um eine Verbindung mit der Strukturformel

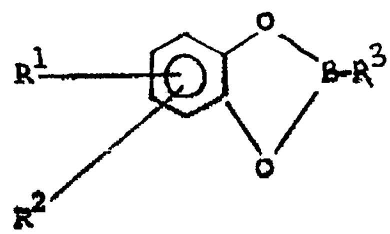

zu bilden, worin $R^1$ und $R^2$ jeweils Wasserstoff oder eine $C_1$-$C_{40}$-Kohlenwasserstoffgruppe sein können und $R^3$
(1) eine $C_1$-$C_{40}$-Kohlenwasserstoffgruppe, die zusätzlich Sauerstoff, Stickstoff, Schwefel oder Bor enthalten kann;
(2) eine $NR^4{}_2$-Gruppe, worin $R^4$ eine $C_1$-$C_{40}$-Kohlenwasserstoffgruppe ist, die zusätzlich Sauerstoff-, Schwefel- oder Stickstoffatome enthalten kann;
(3) eine $OR^5$-Gruppe, worin $R^5$ eine $C_1$-$C_{40}$-Kohlenwasserstoffgruppe ist, die zusätzlich Sauerstoff-, Schwefel- oder Stickstoffatome enthalten kann; oder
(4) eine $OR^6$-Gruppe ist, worin $R^6$ ein Bor, Brenzcatechin, Ester oder Hydroxyl enthaltender Anteil ist,
wobei die Borverbindung aus Borsäure, Boroxid oder einem Alkylborat der Formel

$(R^7O)_mB(OH)_n$

ausgewählt ist,
worin $R^7$ eine Alkylgruppe ist, die von 1 bis 6 Kohlenstoffatome enthält, m 1 bis 3 beträgt, n 0 bis 2 beträgt, wobei deren Summe 3 ist.

2. Zusammensetzung nach Anspruch 1, worin das Verdickungsmittel mindestens 15 Gew.-% des hydroxyhaltigen oder polyhydroxyhaltigen Verdickungsmittels enthält.

3. Zusammensetzung nach Anspruch 1, worin das Fett zwischen 0,2 und 10 Gew.-% phosphor- und schwefelhaltige Verbindungen enthält.

4. Zusammensetzung nach Anspruch 1, worin das hydroxyhaltige Verdickungsmittel Lithiumhydroxystearat ist.

5. Zusammensetzung nach Anspruch 3, worin die Phosphor- und Schwefelverbindung Zinkdihydrocarbyldithiophosphat ist.

6. Zusammensetzung nach Anspruch 1, worin $R^1$ oder $R^2$ Schwefel-, Sauerstoff- oder Stickstoffatome

enthalten.

7. Zusammensetzung nach Anspruch 1, worin das hydroxyhaltige Verdickungsmittel Alkalimetall-, Erdalkalimetall- oder Aminseifen von hydroxylhaltigen Fettsäuren, Fettsäureglyceriden oder Fettsäureestern umfaßt.

8. Zusammensetzung nach Anspruch 7, worin das hydroxyhaltige Verdickungsmittel Lithiumhydroxystearat ist.

9. Zusammensetzung nach Anspruch 7, worin die Phosphor- und Schwefelverbindung Zinkdihydrocarbyldithiophosphat ist.

10. Zusammensetzung nach Anspruch 1, worin das borhaltige Brenzcatechinprodukt die Strukturformel

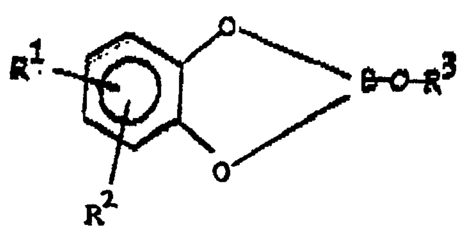

aufweist,
und $R^3$ ein $C_1$-$C_{40}$-Hydrocarbylradikal ist.

11. Zusammensetzung nach Anspruh 10, worin $R^3$ einen Sauerstoff, Schwefel, Stickstoff, Bor, Hydroxyl oder Brenzcatechin enthaltenden Anteil enthält.

12. Zusammensetzung nach Anspruch 1, worin das borhaltige Brenzcatechinprodukt die Strukturformel

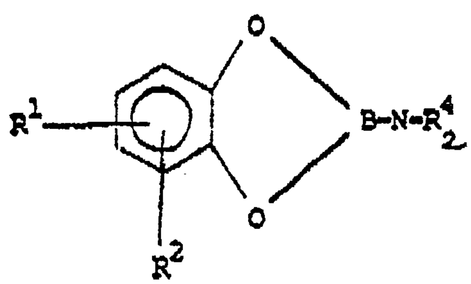

aufweist,
und $R^4$ ein $C_1$-$C_{40}$-Hydrocarbylradikal ist.

13. Zusammensetsung nach Anspruch 1, worin $R^4$ einen Sauerstoff, Schwefel, Stickstoff, Bor, Hydroxyl oder Brenzcatechin enthaltenden Anteil enthält.

14. Zusammensetzung nach Anspruch 12, worin das Verdickungsmittel mindestens 15 Gew.-% des hydroxyhaltigen oder polyhydroxyhaltigen Verdickungsmittels enthält.

15. Zusammensetzung nach Anspruch 12, worin das Fett zwischen 0,5 und 10 Gew.-% phosphor- und schwefelhaltige Verbindungen enthält.

16. Zusammensetsung nach Ansprcuh 12, worin die Brenzcatechinverbindung das borhaltige Reaktionsprodukt von Brenzcatechin, 1-Tetradecen, Borsäure und Oleylamin ist.

17. Zusammensetsung nach Ansprcuh 12, worin das hydroxyhaltige Verdickungsmittel Lithiumhydroxystearat ist.

18. Zusammensetzung nach Anspruch 12, worin die Phosphor- und Schwefelverbindung Zinkdialkyldithiophosphat ist.

19. Verfahren zur Erhöhung des Tropfpunktes einer Fettzusammensetzung, das die Einarbeitung von zwischen 3 und 20 Gew.-% einer Zusammensetzung eines hydroxyhaltigen Verdickungsmittels und zwischen 0,5 und 10 Gew.-% einer borhaltigen Verbindung in das Fett umfaßt, die durch Reaktion einer Borverbindung mit Brenzcatechin erhalten wurde, um eine Verbindung mit der Strukturformel

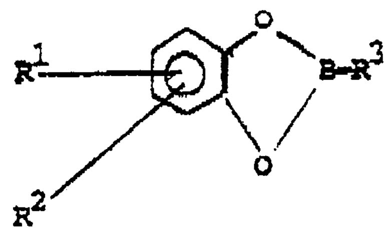

zu bilden, worin $R^1$ und $R^2$ jeweils Wasserstoff oder eine $C_1$-$C_{40}$-Kohlenwasserstoffgruppe sein können und $R^3$

(1) eine $C_1$-$C_{40}$-Kohlenwasserstoffgruppe, die zusätzlich Sauerstoff, Stickstoff, Schwefel oder Bor enthalten kann,

(2) eine $NR^4{}_2$-Gruppe, worin $R^4$ eine $C_1$-$C_{40}$-Kohlenwasserstoffgruppe ist, die zusätzlich Sauerstoff-, Schwefel- oder Stickstoffatome enthalten kann,

(3) eine $OR^5$-Gruppe, worin $R^5$ eine $C_1$-$C_{40}$-Kohlenwasserstoffgruppe ist, die zusätzlich Sauerstoff-, Schwefel- oder Stickstoffatome enthalten kann, oder

(4) eine $OR^6$-Gruppe ist, worin $R^6$ ein Bor, Brenzcatechin, Ester oder Hydroxyl enthaltender Anteil ist, wobei die Borverbindung aus Borsäure, Boroxid oder einem Alkylborat der Formel

$(R^7O)_mB(OH)_n$

ausgewählt ist, worin R7 eine Alkylgruppe ist, die von 1 bis 6 Kohlenstoffatome enthält, m 1 bis 3 beträgt, n 0 bis 2 beträgt, wobei deren Summe 3 ist.

**Patentansprüche für folgenden Vertragsstaat : AT**

1. Verfahren zur Herstellung einer Fettzusammensetzung, welches umfaßt:

(i) Herstellung einer borhaltigen Verbindung durch Reaktion einer Borverbindung mit Brenzcatechin, um eine Verbindung mit der Strukturformel

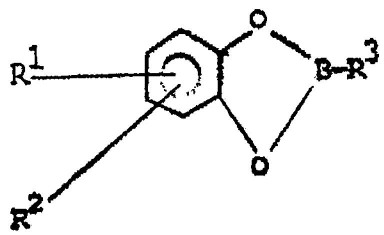

zu bilden,

worin $R^1$ und $R^2$ jeweils Wasserstoff oder eine $C_1$-$C_{40}$-Kohlenwasserstoffgruppe sein können und $R^3$

(1) eine $C_1$-$C_{40}$-Kohlenwasserstoffgruppe, die zusätzlich Sauerstoff, Stickstoff, Schwefel oder Bor enthalten kann,

(2) eine $NR^4{}_2$-Gruppe, worin $R^4$ eine $C_1$-$C_{40}$-Kohlenwasserstoffgruppe ist, die zusätzlich Sauerstoff-, Schwefel-oder Stickstoffatome enthalten kann, oder
(3) eine $OR^5$-Gruppe, worin $R^5$ eine $C_1$-$C_{40}$-Kohlenwasserstoffgruppe ist, die zusätzlich Sauerstoff-, Schwefel-oder Stickstoffatome enthalten kann, oder
(4) eine $OR^6$-Gruppe ist, worin $R^6$ ein Bor, Brenzcatechin, Ester oder Hydroxyl enthaltender Anteil ist, wobei die Borverbindung aus Borsäure, Boroxid oder Alkylborat der Formel

$(R^7O)_mB(OH)_n$

ausgewählt ist, worin $R^7$ eine Alkylgruppe ist, die von 1 bis 6 Kohlenstoffatome enthält, m 1 bis 3 beträgt, n 0 bis 2 beträgt, wobei deren Summe 3 ist; und
(ii) Kombination der Schmierungskomponente mit zwischen 2 und 20 Gew.-% eines hydroxyhaltigen Verdickungsmittels und zwischen 0,2 und 10 Gew.-% der borhaltigen Verbindung, wodurch die Fettzusammensetzung gebildet wird.

2. Verfahren nach Anspruch 1, worin das Verdickungsmittel mindestens 15 Gew.-% des hydroxyhaltigen oder polyhydroxyhaltigen Verdickungsmittels enthält.

3. Verfahren nach Anspruch 1, worin das Fett zwischen 0,2 und 10 Gew.-% phosphor- und schwefelhaltiger Verbindungen enthält.

4. Verfahren nach Anspruch 1, wonach das hydroxyhaltige Verdickungsmittel Lithiumhydroxystearat ist.

5. Verfahren nach Anspruch 3, worin die Phosphor- und Schwefelverbindung Zinkdihydrocarbyldithiophosphat ist.

6. Verfahren nach Anspruch 1, worin $R^1$ oder $R^2$ Schwefel-, Sauerstoff- oder Stickstoffatome enthalten.

7. Verfahren nach Anspruch 1, worin das hydroxyhaltige Verdickungsmittel Alkalimetall-, Erdalkalimetall- oder Aminseifen von hydroxyhaltigen Fettsäuren, Fettsäureglyceriden oder Fettsäureestern umfaßt.

8. Verfahren nach Anspruch 7, worin das hydroxyhaltige Verdickungsmittel Lithiumhydroxystearat ist.

9. Verfahren nach Anspruch 1, worin die Phosphor- und Schwefelverbindung Zinkdihydrocarbyldithiophosphat ist.

10. Verfahren nach Anspruch 1, worin das borhaltige Brenzcatechinprodukt die Strukturformel

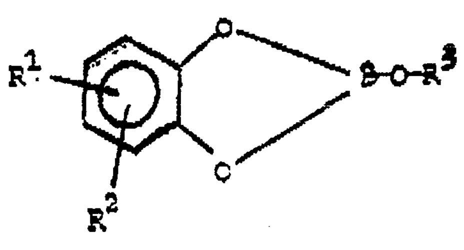

aufweist,
und $R^3$ ein $C_1$-$C_{40}$-Hydrocarbylradikal ist.

11. Verfahren nach Anspruch 10, worin $R^3$ einen Sauerstoff, Schwefel, Stickstoff, Bor, Hydroxyl oder Brenzcatechin enthaltenden Anteil enthält.

12. Verfahren nach Anspruch 1, worin das borhaltige Brenzcatechinprodukt die Strukturformel

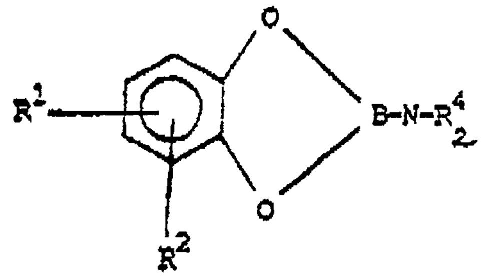

aufweist,
und $R^4$ ein $C_1$-$C_{40}$-Hydrocarbylradikal ist.

13. Verfahren nach Anspruch 1, worin $R^4$ einen Sauerstoff, Schwefel, Stickstoff, Bor, Hydroxyl oder Brenzcatechin enthaltenden Anteil enthält.

14. Verfahren nach Anspruch 12, worin das Verdickungsmittel mindestens 15 Gew.-% des hydroxyhaltigen oder polyhydroxyhaltigen Verdickungsmittels enthält.

15. Verfahren nach Anspruch 12, worin das Fett zwischen 0,5 und 10 Gew.-% phosphor- und schwefelhaltiger Verbindungen enthält.

16. Verfahren nach Anspruch 12, worin die Brenzcatechinverbindung das borhaltige Reaktionsprodukt von Brenzcatechin, 1-Tetradecen, Borsäure und Oleylamin ist.

17. Verfahren nach Anspruch 12, worin das hydroxyhaltige Verdickungsmittel Lithiumhydroxystearat ist.

18. Verfahren nach Anspruch 12, worin die Phosphor-und Schwefelverbindung Zinkdialkyldithiophosphat ist.

19. Verfahren zur Erhöhung des Tropfpunktes einer Fettzusammensetzung, das die Einarbeitung von zwischen 3 uund 20 Gew.-% der Zusammensetzung des hydroxyhaltigen Verdickungsmittels und zwischen 0,5 und 10 Gew.-% einer borhaltigen Verbindung in das Fett umfaßt, die durch Reaktion einer Borverbindung mit Brenzcatechin hergestellt wurde, um eine Verbindung mit der Strukturformel.

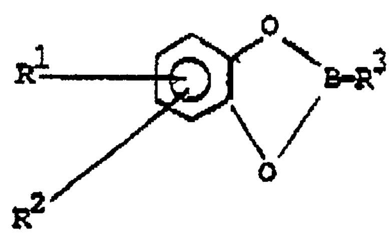

zu bilden,
worin $R^1$ und $R^2$ jeweils Wasserstoff oder eine $C_1$-$c_{40}$-Kohlenwasserstoffgruppe sein können und $R^3$
(1) eine $C_1$-$C_{40}$-Kohlenwasserstoffgruppe, die zusätzlich Sauerstoff, Stickstoff, Schwefel oder Bor enthalten kann,
(2) eine $NR^4{}_2$-Gruppe, worin $R^4$ eine $C_1$-$c_{40}$-Kohlenwasserstoffgruppe ist, die zusätzlich Sauerstoff-, Schwefel-oder Stickstoffatome enthalten kann,
(3) eine $OR^5$-Gruppe, worin $R^5$ eine $C_1$-$C_{40}$-Kohlenwasserstoffgruppe ist, die zusätzlich Sauerstoff-, Schwefel-oder Stickstoffatome enthalten kann oder
(4) eine $OR^6$-Gruppe ist, worin $R^6$ ein Bor, Brenzcatechin, Ester oder Hydroxyl enthaltender Anteil ist, wobei die Borverbindung aus Borsäure, Boroxid oder einem Alkylborat der Formel

$(R^7O)_mB(OH)_n$

ausgewählt ist,
worin $R^7$ eine Alkylgruppe ist, die von 1 bis 6 Kohlenstoffatome enthält, m 1 bis 3 beträgt, n 0 bis 2 beträgt, wobei deren Summe 3 ist.